# FASCICULE DE BREVET EUROPEEN

(11) **EP 4 408 338 B1**
(45) Date de publication et mention de la délivrance du brevet: **24.12.2025**
(21) Numéro de dépôt: 22789971.3
(22) Date de dépôt: 27.09.2022
(51) Int. Cl.: A61C 5/40, G06F 3/00

(54) **DISPOSITIF DE SURVEILLANCE D'UNE DÉFAILLANCE D'UN INSTRUMENT ENDODONTIQUE**
VORRICHTUNG ZUR ÜBERWACHUNG EINES VERSAGENS EINES ENDODONTISCHEN INSTRUMENTS
DEVICE FOR MONITORING A FAILURE OF AN ENDODONTIC INSTRUMENT

(30) Priorité: 01.10.2021 FR 2110434
(43) Date de publication de la demande: 07.08.2024
(73) Titulaire: Micro-Mega International, 25000 Besancon (FR)
(72) Inventeur: RAHOUADJ, Rachid, 54000 Nancy (FR); VINCENT, Marin, 54690 Lay-Saint-Christophe (FR); BALTHAZARD, Rémy, 54130 Saint-Max (FR); DEVALLOIR, Marie, 25000 Besancon (FR)
(74) Mandataire: Icosa
(86) Numéro de dépôt international: PCT/FR2022/051821
(87) Numéro de publication internationale: WO 2023/052724

(56) Documents cités:
- EP-A1- 2 575 205
- EP-A1- 2 696 344
- EP-A1- 3 338 728
- WO-A1-2013/124591
- WO-A1-2015/044460
- DE-A1- 3 511 140
- FR-A1- 2 850 268

## Description

### Domaine technique

L'invention se rapporte au domaine technique de l'endodontie, et en particulier celui de la prévention d'incidents dans le domaine endodontique.

### Art antérieur

Lors d'un traitement endodontique, le bris instrumental est l'une des complications les plus fréquentes. Les complications directes de cette rupture instrumentale sont d'ordre clinique :
- s'il est possible de récupérer le bris d'instrument, les conséquences sont une augmentation de la durée du traitement et une potentielle fragilisation de la dent par une réduction de l'épaisseur de paroi résiduelle nécessaire à son retrait ;
- s'il n'est pas possible de récupérer le bris d'instrument, les conséquences peuvent (i) être liées à une désinfection insuffisante du réseau canalaire entrainant douleur post-opératoire, une non cicatrisation et donc un échec du traitement endodontique ou (ii) être liées à l'apparition d'un processus infectieux non existant au moment et aboutissant à des douleurs et échecs de traitement à plus ou moins moyen terme.

Les occurrences de bris instrumentaux sont généralement réduites par la conception des instruments canalaires, afin de les rendre plus résistants aux contraintes exercées lors du traitement endodontique. Cependant, les facteurs de bris ne sont pas uniquement limités aux caractéristiques de l'instrument : la façon dont le praticien l'utilise, ou encore la forme du canal à traiter sont des paramètres importants.

Afin de limiter les sur-sollicitations subies par l'instrument, certaines pièces à main, entrainant l'instrument, sont munies de dispositifs de contrôle du couple exercé par le moteur sur l'instrument, ou encore permettent une mesure en temps réel des paramètres de fonctionnement de l'instrument. Cependant, ce type de mesures instantanées ne permet pas de prévenir tous les types de ruptures, telles que les ruptures par fatigue ou par fluage.

En particulier, dans le cas du traitement d'un canal radiculaire présentant un coude, c'est-à-dire une courbure très importante et de rayon réduit, la flexion rotative que subit l'instrument peut conduire à une rupture quasi-instantanée. Ainsi, la rupture de l'instrument en flexion-torsion peut se produire à des valeurs de sollicitations mécaniques, telles que le couple, largement inférieures à la limite de celles maximales qualifiées par le fabricant.

Dans le cas d'instruments réutilisables, les contraintes et les dégradations subies par l'instrument s'accumulent et ne sont pas prises en compte dans ce type d'analyse instantanée. Des ruptures instrumentales peuvent donc survenir.

Le document EP3338728A1 décrit un dispositif pour contrôler le couple exercé sur un instrument endodontique.

### Exposé de l'invention

L'un des buts de l'invention est de proposer un dispositif de surveillance d'un instrument endodontique, afin de détecter au plus tôt la survenance d'une défaillance.

À cet effet, il a été mis au point un procédé de surveillance d'une défaillance d'un instrument endodontique utilisé lors d'un traitement endodontique pendant lequel l'instrument est entrainé par une pièce à main et génère un ensemble de signaux d'émission acoustique. Un tel procédé est cependant exclu de l'objet de l'invention.

Le procédé est remarquable en ce qu'il comprend des étapes consistant à :
- capter et analyser l'ensemble des signaux d'émission acoustique générés par l'utilisation de l'instrument lors de la mise en forme d'un canal radiculaire par exemple ;
- lorsqu'une défaillance de l'instrument survient, générant ainsi un signal d'émission acoustique de défaillance, détecter ledit signal d'émission acoustique de défaillance parmi l'ensemble des signaux d'émission acoustique captés et analysés afin de détecter la survenance de la défaillance.

Les défaillances survenant au sein de l'instrument peuvent être de différentes natures. Il peut s'agir de défaillances structurelles, telles que :
- l'apparition d'une fissure ou d'une amorce de rupture au sein du matériau constituant l'instrument, et susceptible de conduire à une rupture ;
- une déformation plastique locale, pouvant résulter en un dévrillage ou un sur-vrillage de l'instrument ;
- le changement de la structure cristalline du matériau, par exemple une transformation d'austénite en martensite. Ce changement de structure cristalline modifie le comportement mécanique de l'instrument et peut, en fonction de la situation clinique, aboutir à la rupture de l'instrument.

Il peut également s'agir de défaillances pratiques, telles que :
- un bourrage des gorges hélicoïdales définies entre des lèvres de coupes de l'instrument, comblées par l'accumulation de débris de coupe et empêchant le bon fonctionnement de l'instrument ;
- une sur-sollicitation mécanique que le praticien applique à l'instrument, au-delà des contraintes pour lesquelles l'instrument a été conçu.

Les signaux d'émission acoustique quant à eux sont des libérations d'énergie sous forme d'ondes élastiques transitoires qui accompagnent divers processus évolutifs, parfois irréversibles. Dans le cas d'espèce, les processus évolutifs peuvent être par exemple :
- la mise sous contrainte du matériau constituant l'instrument ;
- le déplacement de dislocations au sein du matériau, par exemple dans le cas d'une déformation plastique ;
- l'apparition, puis la propagation d'une fissure ou d'une amorce de rupture sur défaut microstructural ou géométrique.

Le procédé permet donc d'identifier les défaillances survenant au sein de l'instrument, en amont de sa rupture lorsqu'il s'agit d'une défaillance structurale ou de conception. Par exemple, détecter l'apparition d'une fissure, synonyme de rupture imminente de l'instrument, permet d'en prendre connaissance avant la rupture de l'instrument. Il est par la suite possible d'arrêter à temps l'utilisation de l'instrument.

Les ruptures et les ruines pouvant être évitées, les complications des soins le seront également, puisque le praticien pourra changer d'instrument ou adapter son protocole en fonction du traitement endodontique à réaliser.

Dans un mode de réalisation préféré, l'étape de détection des signaux d'émission acoustique de défaillance consiste à comparer des paramètres d'émissions acoustiques à des modèles d'émissions acoustiques de défaillance préalablement enregistrés dans une base de données et/ou par rapport à des seuils prédéterminés. De cette manière, les temps d'analyse et de traitement sont réduits, et les chances de reconnaître les signaux d'émission acoustique de défaillance au sein de l'ensemble des signaux d'émission acoustique captés sont optimales.

Avantageusement, après avoir détecté la défaillance, et notamment l'initiation et le développement des modes de défaillance, le procédé comprend une étape consistant à l'identifier parmi une liste de types de défaillances possibles établie par rapport à des modèles d'émissions acoustiques de défaillance préalablement enregistrés dans une base de données et/ou par rapport à des seuils prédéterminés. Le praticien dispose ainsi d'informations supplémentaires quant aux types de défaillances rencontrées. Ces informations peuvent être transmises au fabricant de l'instrument afin d'être prises en compte dans une démarche d'amélioration continue.

De préférence, après avoir détecté la défaillance, le procédé comprend une étape consistant à émettre un signal d'alerte pour que le praticien soit averti de la survenance de la défaillance, et donc de l'imminence de la rupture de l'instrument.

Le description présente également un procédé de pilotage d'une pièce à main entrainant un instrument endodontique pendant un traitement endodontique, et mettant en œuvre le procédé de surveillance selon les caractéristiques techniques précitées. Ce procédé est remarquable en ce qu'il consiste à adapter des paramètres d'entrainement de l'instrument en fonction de la défaillance identifiée. Ainsi, le praticien est assisté dans son geste lorsque la défaillance survient. Si la rupture est imminente, l'entrainement de l'instrument peut être arrêté. Si la rupture n'est pas imminente, l'entrainement de l'instrument peut être adapté de manière à poursuivre le soin en sécurité, tout en prolongeant la durée de vie de l'instrument.

Dans un certain mode de réalisation, le praticien renseigne préalablement un score de complexité du traitement à accomplir, par exemple si le canal radiculaire à traiter présente une géométrie complexe, et l'adaptation des paramètres d'entrainement est ajustée, ou pondérée, en fonction de ce score de complexité du traitement. Cela permet d'augmenter la marge de sécurité dans le cas de traitements à risques, lors desquels la rupture de l'instrument est plus probable si une défaillance survient.

L'invention concerne un dispositif pour la mise en œuvre du procédé selon les caractéristiques précitées, et remarquable en ce qu'il comprend :
- un capteur de signaux d'émission acoustique générés par l'entrainement de l'instrument lors de la mise en forme canalaire, tel qu'un capteur ultrasonore ;
- des moyens d'analyse acoustique configurés pour détecter un signal d'émission acoustique de défaillance parmi l'ensemble des signaux d'émission acoustique, afin de détecter la survenance d'une défaillance de l'instrument.

De cette manière, le dispositif comprend les moyens essentiels pour une mise en œuvre efficace du procédé décrit.

Avantageusement, les moyens d'analyse sont configurés pour identifier la défaillance parmi une liste de défaillances possibles établie par rapport à des modèles d'émissions acoustiques de défaillance préalablement enregistrés dans une base de données et/ou par rapport à des seuils prédéterminés, afin de diminuer les temps de traitement et de maximiser les chances de reconnaissance des signaux d'émission acoustique de défaillance au sein de l'ensemble des signaux d'émission acoustique captés.

L'invention concerne également une pièce à main pour l'entrainement d'un instrument endodontique, comprenant un dispositif selon les caractéristiques précitées ainsi que des moyens d'alerte. De cette manière, la pièce à main comprend les éléments essentiels pour la mise en œuvre d'une détection de défaillance, et est configurée pour alerter le praticien en cas de défaillance.

Avantageusement, la pièce à main comprend une interface programmable reliée aux moyens d'analyse acoustique, et l'interface programmable est configurée pour adapter des paramètres d'entrainement de l'instrument en fonction de la défaillance identifiée. Ainsi, l'invention s'intègre parfaitement dans le matériel qu'utilise le praticien de manière classique, et son utilisation est naturelle pour le praticien.

Selon des modes de réalisation possibles :
- le capteur d'émission acoustique est disposé à l'intérieur d'un corps de la pièce à main ; afin d'être disposé à proximité de l'instrument, et que la pièce à main soit un kit complet ; et/ou
- le capteur d'émission acoustique est à l'extérieur d'un corps de la pièce à main, et est configuré pour être couplé sur la dent ou à proximité de la dent du patient ; afin d'être moins sensible aux signaux d'émission acoustique émis au sein de la pièce à main.

### Brève description des dessins

[Fig.1] est un schéma de principe illustrant le procédé de fonctionnement du dispositif de l'invention.
[Fig.2] est un schéma illustrant les caractéristiques d'une émission acoustique.
[Fig.3] est un graphe illustrant des modèles de corrélation.
[Fig.4] est un autre schéma de principe illustrant le procédé de fonctionnement du dispositif de l'invention.

### Description détaillée de l'invention

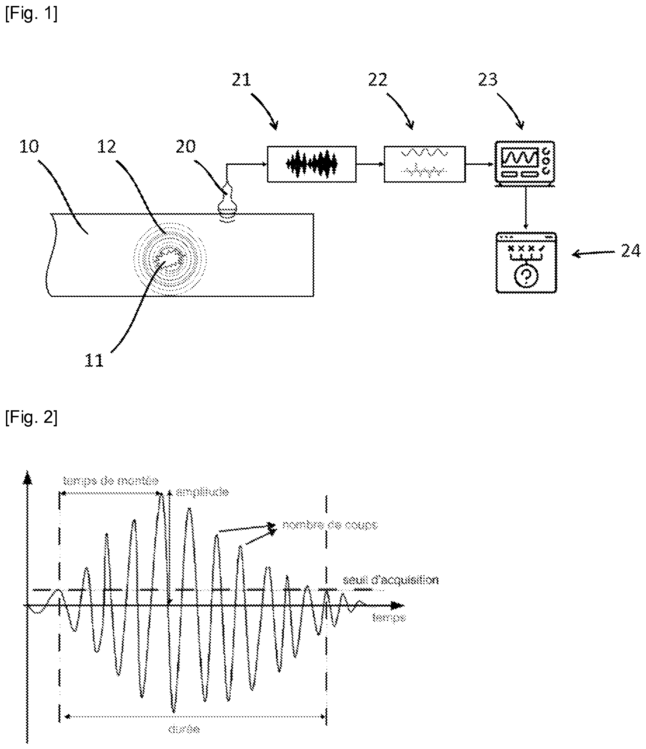

En référence aux figures 1 à 4, l'invention concerne un dispositif de détection d'une défaillance survenant au sein d'un instrument canalaire (10) lors d'un traitement endodontique, un dispositif mettant en œuvre un tel procédé, et une pièce à main entraînant un instrument canalaire (10) et comprenant un tel dispositif. L'instrument endodontique est par exemple un instrument canalaire, communément appelé lime, comportant une lame comprenant une pluralité de lèvres de coupe hélicoïdales. L'instrument est par exemple entrainé en vibration, en vas et vient, en rotation simple, en rotation alternée, ou tout autre type d'entrainement.

La figure 1 illustre le principe de l'analyse des signaux d'émission acoustique émis au sein d'un instrument (10). Lors de son utilisation, l'instrument (10) subit des contraintes mécaniques telles que de la flexion, de la torsion, et de la flexion / torsion combinée. Lorsque le matériau constitutif de l'instrument (10) est sous contrainte, il émet des signaux d'émission acoustique, non représentés par souci de lisibilité des figures. Ces signaux d'émission acoustique sont généralement situés dans le domaine des ultrasons, c'est-à-dire que leurs fréquences sont généralement supérieures à 20 kHz.

De plus, les frottements mécaniques au sein d'une pièce à main entraînant l'instrument (10), l'usinage que l'instrument réalise au sein du canal ainsi que le moteur de la pièce à main sont autant de sources d'émission acoustique et de bruit.

Lors de l'utilisation de l'instrument (10), une défaillance (11) de l'instrument (10) peut apparaitre. Il peut s'agir par exemple d'une zone de déformation plastique, ou de l'apparition d'une fissure. Cette défaillance (11) va émettre un signal d'émission acoustique de défaillance (12) lors de son apparition. Le signal va se propager au sein du matériau de l'instrument (10), puis, par contact, au sein des autres pièces avec lesquelles l'instrument (10) est en contact. Les pièces comprennent entre autres l'alésage dans lequel est monté l'instrument (10), ou encore la dent traitée.

Le procédé consiste à :
- capter et analyser les signaux d'émission acoustique générés par l'utilisation de l'instrument (10), c'est-à-dire aussi bien les signaux d'émission acoustique de la pièce à main, que les bruits parasites, et le signal d'émission acoustique de défaillance (12) ;
- au sein de l'ensemble des signaux d'émission acoustique captés, détecter le signal d'émission acoustique de défaillance (12) afin de détecter la survenance de la défaillance (11).

En pratique, un capteur (20) de signaux d'émission acoustique est disposé sur, ou à proximité, de l'instrument (10). Il s'agit de préférence d'un capteur piézo-électrique, monté en applique sur une pièce du milieu endodontique. Il doit alors y avoir une continuité mécanique entre l'instrument (10) et l'endroit où est disposé le capteur (20), c'est-à-dire que les pièces entre l'instrument (10) et le capteur (20) doivent se toucher afin de conduire les ondes élastiques des émissions acoustiques émises par l'instrument (10), et en particulier l'émission acoustique de défaillance (12).

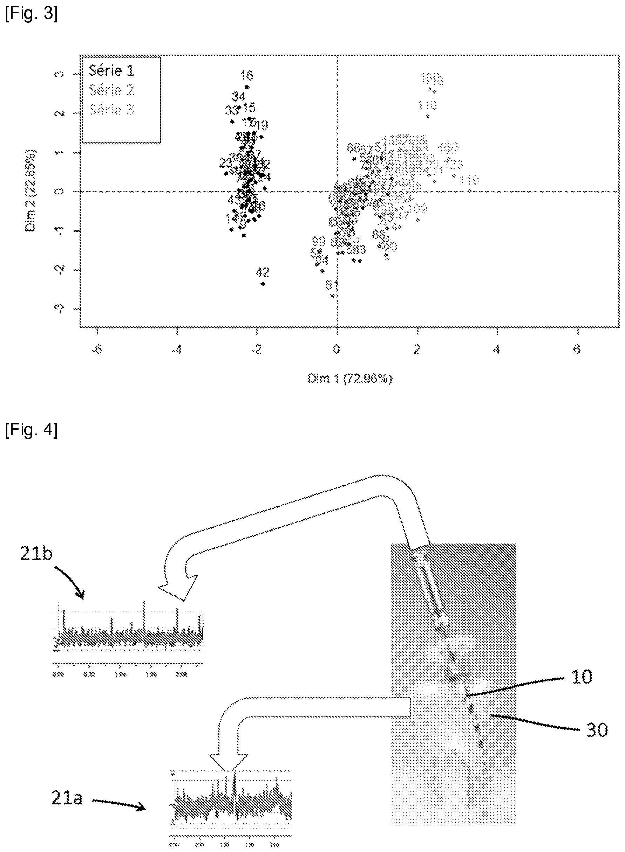

En référence à la figure 4, le capteur (20) peut donc être disposé :
- sur la dent traitée, ou à proximité de celle-ci. Le capteur (20) est donc à proximité immédiate de l'instrument (10), et est moins soumis à l'émission acoustique provenant de la pièce à main. Dans ce cas, les signaux d'émission acoustique captés sont repérés (21a) sur la figure 4.
- à l'intérieur d'une pièce à main comprenant les moyens pour mettre en œuvre le procédé décrit. Bien que le capteur (20) soit plus soumis aux signaux d'émission acoustique provenant de la pièce à main, il n'est pas nécessaire d'installer le capteur (20) dans la bouche du patient. Les préparatifs sont donc réduits et le traitement est plus facile à mettre en œuvre. Dans ce cas, les signaux d'émission acoustique captés sont repérés (21b) sur la figure 4.

La localisation du capteur (20) a un impact sur sa perception des émissions acoustiques, aussi les signaux des émissions captées (21a, 21b) sont différents.

Dans certains modes, il y a plusieurs capteurs (20), de sorte que la localisation de la défaillance peut être déterminée par triangulation. Multiplier les capteurs (20) permet également de fiabiliser le signal obtenu, par redondance et confrontation d'information. Il peut donc y avoir un capteur (20) au sein de la pièce à main et un autre capteur (20) disposé sur, ou à proximité, de la dent traitée, ou encore plusieurs capteurs (20) dans la bouche ou dans la pièce à main.

Afin de parfaire la transmission des ondes élastiques entre le capteur (20) et la pièce sur laquelle il est monté, le capteur (20) peut être couplé, par exemple avec un gel, afin de réduire, voire de faire disparaître la couche d'air entre le capteur (20) et la pièce sur laquelle il est monté.

Le capteur (20) capte l'intégralité des signaux d'émission acoustique et du bruit du milieu endodontique. Le signal capté doit donc être traité afin de pouvoir faciliter son analyse ainsi que la reconnaissance d'un signal d'émission acoustique de défaillance (12) au sein de l'ensemble des signaux d'émission acoustique captés.

À cet effet, le traitement comprend généralement les étapes suivantes :
- une pré-amplification, permettant d'augmenter l'amplitude de certaines composantes de l'ensemble des signaux d'émission acoustique captés et d'améliorer le rapport signal sur bruit ;
- un filtrage, afin de supprimer le bruit et certains signaux d'émission acoustique ne correspondant pas à une défaillance, et éventuellement d'isoler certaines composantes de l'ensemble des signaux d'émission acoustique sur la base de paramètres ou caractéristiques des émissions acoustiques captées ;
- une amplification afin d'améliorer le signal en vue de son traitement ;
- le traitement final effectué par des moyens d'analyse acoustique (24), et permettant de détecter et éventuellement d'identifier le signal d'émission acoustique de défaillance (12).

En pratique, ces étapes sont mises en œuvre respectivement par :
- un pré-amplificateur (21) ;
- un filtre (22) ;
- un amplificateur (23), tel qu'un amplificateur de mesure ;
- des moyens d'analyse acoustique (24), par l'exécution d'un algorithme ou d'un programme exécuté par un ordinateur. C'est-à-dire que les moyens d'analyse acoustique (24) comprennent un support lisible par ordinateur, sur lequel est enregistré le programme d'ordinateur, celui-ci comprenant les lignes de code permettant d'exécuter l'analyse acoustique désirée.

Etant donné que le procédé permet de récupérer le maximum d'informations d'ordres physique et mécanique sur les conditions d'utilisation de l'instrument (10), il est possible, grâce au traitement de données effectué, de suivre en temps réel des conditions d'usinage des tissus, et de suivre la réponse mécanique du tissu traité ainsi que de son environnement proche, *etc.*

Par exemple concernant la déformation de l'instrument (10), dont le matériau constitutif est généralement un alliage à mémoire de forme, la déformation pourra être accompagnée d'une transition de phase entre austénite et martensite impliquant un certain nombre de variants, et qui sera accompagnée d'une libération d'énergie acoustique spécifique, dans le domaine des ultrasons.

Concernant le tissu usiné, il fait l'objet d'une plastification localisée du fait de la formation de copeaux, qui produisent également une émission acoustique ultrasonore.

Les éléments permettant de mettre en œuvre le procédé sont avantageusement compris dans un dispositif de l'invention adapté pour la mise en œuvre du procédé décrit, de sorte qu'il est possible d'équiper des cabinets de chirurgie dentaire quel que soit le matériel de soin qu'ils possèdent déjà.

Dans un mode de réalisation préféré, ce dispositif est compris dans une pièce à main entraînant l'instrument (10). Ainsi, les éléments essentiels pour la mise en œuvre du procédé sont au plus proche de l'instrument (10). Par ailleurs, le dispositif peut coopérer plus facilement avec d'autres éléments de la pièce à main, tels qu'une interface programmable de la pièce à main.

Les moyens d'analyse acoustique (24) sont configurés pour détecter un signal d'émission acoustique de défaillance (12) en fonction des caractéristiques de l'ensemble des signaux d'émission acoustique captés.

En référence à la figure 2, les caractéristiques d'un signal d'émission acoustique peuvent être, sans toutefois s'y limiter :
- sa fréquence ;
- sa tension efficace RMS ;
- son amplitude ;
- son temps de montée ;
- son taux de comptage
- son comptage cumulé.

Par exemple, sur des signaux d'une fréquence particulière au sein de l'ensemble des signaux d'émission acoustique, le franchissement d'un seuil prédéterminé est interprété par les moyens d'analyse acoustique (24) comme étant un signal d'émission acoustique de défaillance (12).

Le même principe s'applique par exemple à la combinaison d'une tension RMS, d'un taux de comptage, ou d'un comptage cumulé.

Afin de faciliter et d'accélérer le traitement du signal capté, la reconnaissance d'un signal d'émission acoustique de défaillance (12) est effectuée en comparant les paramètres des signaux d'émission acoustique captés avec des modèles de signaux d'émission acoustique de défaillance (11) préalablement enregistrés dans une base de données.

L'obtention de ces modèles préenregistrés nécessite la réalisation d'essais destructifs d'instruments (10), dans des conditions d'utilisation les plus proches possibles des conditions réelles, et lors desquelles l'ensemble des signaux d'émission acoustique sont enregistrées.

Lorsque le nombre d'essai est grand et que la population des échantillons est suffisante, en procédant par analyse statistique multidimensionnelle des données, il est possible de détecter les corrélations qu'il existe entre certaines défaillances et les types de signaux d'émission acoustique captés. En référence à la figure 3, on voit une illustration schématique d'analyse statistique multidimensionnelle des données révélant la corrélation de trois nuages de points formant chacun une série particulière, en projection selon deux dimensions choisies (avec par exemple la première dimension étant la fréquence, et la deuxième dimension étant le temps de montée).

Cette méthode d'analyse statistique multidimensionnelle de données permet, pour un type d'instrument (10) donné, d'acquérir un modèle de signaux d'émission acoustique de défaillance (12) pour chacune des défaillances (11) recherchées et testées.

Bien entendu, le type de défaillance (11) attendue, ainsi que les caractéristiques du signal d'émission acoustique de défaillance (12) émise varient en fonction du type d'instrument (10) considéré : en effet, le choix de matériau peut être différent d'un type d'instrument (10) à un autre. Il en est de même par exemple pour la géométrie, la dimension, les paramètres d'entrainement et la répartition des masses.

Aussi, l'acquisition des modèles doit être faite pour chaque type d'instrument (10) pour lesquels on souhaite mettre en œuvre l'invention.

De préférence, les modèles d'émission acoustique préenregistrés d'une gamme d'instruments endodontiques (10) sont inscrits dans une base de données, interrogeable par les moyens d'analyse acoustique (24), ou encore par l'interface programmable de la pièce à main.

Afin d'obtenir le plus d'informations possibles sur les conditions d'utilisation ainsi que sur les différents modes de rupture des instrument (10), une fois que l'occurrence d'une défaillance (11) est détectée, le procédé comprend en plus une étape d'identification du type de la défaillance (11). De la même manière que pour la détection, l'identification est effectuée par comparaison avec des modèles préenregistrés ou par comparaison avec des seuils prédéfinis.

Cette information peut être mise à la disposition du praticien, notamment afin qu'il adapte sa pratique dans le cadre de défaillances (11) liées à la pratique. Il peut par exemple s'agir d'une tendance à appuyer trop fort sur l'instrument (10) lors d'une efficacité de coupe réduite suite à l'accumulation de débris dans les gorges de l'instrument.

Cette information peut également être mise à la disposition du fabricant de l'instrument (10) afin qu'il puisse entamer des démarches d'amélioration continue s'il constate qu'un type de défaillance (11) particulier survient trop souvent.

Dans ces cas, les moyens d'analyse acoustique (24) sont reliés à tous moyens d'affichage ou de transmission de données adaptées, et les moyens d'analyse acoustique (24) exécutent un programme d'ordinateur adéquat pour mettre en œuvre lesdits affichage et transmission.

Dans un certain mode de réalisation, lorsque la défaillance (11) est détectée, le procédé comprend ensuite une étape d'émission d'un signal d'alerte. Le praticien est donc averti du danger de rupture pesant sur l'instrument (10) et peut donc interrompre son utilisation à temps. Si le procédé comprend une étape d'identification de la défaillance (11), le signal d'alerte peut être adapté en fonction du type de défaillance (11).

De préférence, la pièce à main entrainant un instrument endodontique (10) pendant un traitement endodontique est pilotée par un procédé apte à identifier le type de défaillance (11) survenant, et à adapter les paramètres d'entrainement de l'instrument (10) en fonction de la défaillance (11) identifiée.

De cette manière, le procédé peut par exemple :
- interrompre la rotation de l'instrument (10) si la rupture est imminente ;
- diminuer la vitesse de rotation ou le couple appliqué à l'instrument (10) si la rupture n'est pas imminente et que la durée de vie de l'instrument (10) peut encore être prolongée.

En pratique, une pièce à main selon l'invention comprend une interface programmable reliée aux moyens d'analyse acoustique (24), et l'interface programmable est configurée pour adapter des paramètres de l'instrument (10) en fonction de la défaillance identifiée.

Avantageusement, cette interface programmable permet au praticien de renseigner au préalable un score de complexité du traitement à accomplir. Si le traitement est complexe et que le risque de casse est élevé, l'adaptation des paramètres d'entrainement de l'instrument (10) est ajustée en conséquence : on pondère les gains par rapport au risque de rupture, plutôt que de chercher à maximiser la durée de vie l'instrument (10). Les paramètres d'entrainement de l'instrument sont encore plus réduits dans un but de sécurisation.

La démarche inverse est également envisageable dans le cas d'un traitement simple.

Le procédé permet bel et bien de détecter l'occurrence d'une défaillance (11) au sein d'un instrument (10) utilisé lors du traitement d'un canal radiculaire. Ce procédé de détection permet par conséquent de prévenir la rupture de l'instrument (10), qui entrainerait des complications cliniques.

Le dispositif et la pièce à main peuvent être conformés différemment de la description et des figures, le cadre de l'invention étant défini par les revendications.

En outre, les caractéristiques techniques des différents modes de réalisation et variantes mentionnés ci-dessus peuvent être, en totalité ou pour certaines d'entre elles, combinées entre elles. Ainsi, le dispositif et la pièce peuvent être adaptés en termes de coût, de fonctionnalités et de performance.

## Revendications

1. Dispositif endodontique ***caractérisé en ce qu***'il comprend :
- un capteur (20) configuré pour capter l'ensemble des signaux d'émission acoustique générés par l'utilisation d'un instrument (10) ;
- des moyens d'analyse acoustique (24) configurés pour détecter un signal d'émission acoustique de défaillance (12) parmi l'ensemble des signaux d'émission acoustique, afin de détecter la survenance d'une défaillance de l'instrument (10).

2. Dispositif selon la revendication 1, ***caractérisé en ce que*** les moyens d'analyse (24) sont configurés pour identifier la défaillance (11) parmi une liste de défaillances possibles établie par rapport à des modèles de signaux d'émission acoustique de défaillance préalablement enregistrés dans une base de données et/ou par rapport à des seuils prédéterminés.

3. Pièce à main pour l'entrainement d'un instrument endodontique (10), ***caractérisée* en ce qu'**elle comprend un dispositif selon l'une des revendications 1 à 2 ainsi que des moyens d'alerte.

4. Pièce à main selon la revendication 3 ***caractérisée en ce qu***'elle comprend une interface programmable reliée aux moyens d'analyse acoustique (24), l'interface programmable est configurée pour adapter des paramètres de dynamique instrumentale (10) en fonction de la défaillance (11) identifiée.

5. Pièce à main selon la revendication 3 ou 4, ***caractérisée en ce que*** le capteur (20) est disposé à l'intérieur d'un corps de la pièce à main.

6. Pièce à main selon la revendication 3 ou 4, ***caractérisée en ce que*** le capteur (20) est à l'extérieur d'un corps de la pièce à main, et est configuré pour être couplé sur la dent ou à proximité de la dent du patient.

7. Pièce à main selon la revendication 4, ***caractérisée en ce que*** l'interface programmable est configurée pour que l'adaptation des paramètres de dynamique instrumentale (10) soit ajustée en fonction d'un score de complexité du traitement préalablement renseigné par un praticien.

## Patentansprüche

1. Endodontische Vorrichtung, ***dadurch gekennzeichnet, dass*** sie Folgendes umfasst:
- einen Sensor (20), der so eingerichtet ist, dass er alle akustischen Emissionssignale erfasst, die durch die Verwendung eines Instruments (10) erzeugt werden;
- akustische Analysemittel (24), die so eingerichtet sind, dass sie ein akustisches Ausfallemissionssignal (12) aus der Gesamtheit der akustischen Emissionssignale erkennen, um das Auftreten eines Ausfalls des Instruments (10) zu erkennen.

2. Vorrichtung nach Anspruch 1, ***dadurch gekennzeichnet, dass*** die Analysemittel (24) so eingerichtet sind, dass sie den Ausfall (11) aus einer Liste möglicher Ausfälle identifizieren, die in Bezug auf zuvor in einer Datenbank gespeicherte Muster akustischer Ausfallemissionssignale und/oder in Bezug auf vorbestimmte Schwellenwerte erstellt wurde.

3. Handstück zum Antrieb eines endodontischen Instruments (10), **dadurch *gekennzeichnet,* dass** es eine Vorrichtung nach einem der Ansprüche 1 bis 2 sowie Warnmittel umfasst.

4. Handstück nach Anspruch 3, ***dadurch gekennzeichnet, dass*** es eine programmierbare Schnittstelle umfasst, die mit den akustischen Analysemitteln (24) verbunden ist, wobei die programmierbare Schnittstelle so eingerichtet ist, dass sie Parameter der Instrumentendynamik (10) in Abhängigkeit von dem identifizierten Ausfall (11) anpasst.

5. Handstück nach Anspruch 3 oder 4, ***dadurch gekennzeichnet, dass*** der Sensor (20) innerhalb eines Körpers des Handstücks angeordnet ist.

6. Handstück nach Anspruch 3 oder 4, ***dadurch gekennzeichnet, dass*** sich der Sensor (20) außerhalb eines Körpers des Handstücks befindet und so eingerichtet ist, dass er an den Zahn oder in der Nähe des Zahns des Patienten gekoppelt werden kann.

7. Handstück nach Anspruch 4, ***dadurch gekennzeichnet, dass*** die programmierbare Schnittstelle so eingerichtet ist, dass die Anpassung der Parameter der Instrumentendynamik (10) in Abhängigkeit von einem zuvor von einem Arzt eingegebenen Komplexitätswert der Behandlung nachgestellt wird.

## Claims

1. An endodontic device ***characterised in that*** it comprises:
- a sensor (20) configured to sense the set of acoustic emission signals generated by use of an instrument (10);
- acoustic analysis means (24) configured to detect a failure acoustic emission signal (12) from among the set of acoustic emission signals, in order to detect the occurrence of a failure of the instrument (10).

2. The device according to claim 1, ***characterised in that*** the analysis means (24) are configured to identify the failure (11) from among a list of possible failures established with regards to models of failure acoustic emission signals recorded beforehand in a database and/or with regards to predetermined thresholds.

3. A handpiece for driving an endodontic instrument (10), ***characterised in that*** it comprises a device according to one of claims 1 to 2 as well as alert means.

4. The handpiece according to claim 3, ***characterised in that*** it comprises a programmable interface connected to the acoustic analysis means (24), the programmable interface is configured to adapt instrumental dynamics parameters (10) according to the identified failure (11).

5. The handpiece according to claim 3 or 4, ***characterised in that*** the sensor (20) is arranged inside a body of the handpiece.

6. The handpiece according to claim 3 or 4, ***characterised in that*** the sensor (20) is outside a body of the handpiece, and is configured to be coupled on the tooth or proximate to the tooth of the patient.

7. The handpiece according to claim 4, ***characterised in that*** the programmable controller is configured so that adaptation of the instrumental dynamics parameters (10) is adjusted according to a complexity score of the treatment entered beforehand by a practitioner.
